(19) Europäisches Patentamt
European Patent Office
Office européen des brevets

(11) **EP 3 728 158 B1**

(12) **EUROPÄISCHE PATENTSCHRIFT**

(45) Veröffentlichungstag und Bekanntmachung des Hinweises auf die Patenterteilung:
**26.03.2025 Patentblatt 2025/13**

(21) Anmeldenummer: **18816118.6**

(22) Anmeldetag: **18.12.2018**

(51) Internationale Patentklassifikation (IPC):
***C04B 40/06*** *(2006.01)*

(52) Gemeinsame Patentklassifikation (CPC):
(C-Sets verfügbar)
**C04B 28/06; C04B 26/02; C04B 26/16; C04B 28/065; C04B 38/10; C04B 40/065;**
C04B 2111/00086 (Forts.)

(86) Internationale Anmeldenummer:
**PCT/EP2018/085480**

(87) Internationale Veröffentlichungsnummer:
**WO 2019/121671 (27.06.2019 Gazette 2019/26)**

(54) **MEHRTEILIGER KIT ZUR HERSTELLUNG ANORGANISCH-ORGANISCHER HYBRIDSCHÄUME**

MULTI-CHAMBER KIT FOR PRODUCING INORGANIC-ORGANIC HYBRID FOAMS

KIT MULTI-CHAMBRES POUR LA PRÉPARATION DE MOUSSES HYBRIDES INORGANIQUES-ORGANIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.12.2017 EP 17208884**

(43) Veröffentlichungstag der Anmeldung:
**28.10.2020 Patentblatt 2020/44**

(73) Patentinhaber: **BASF SE**
**67056 Ludwigshafen am Rhein (DE)**

(72) Erfinder:
- **CENTNER, Alexander**
  **67056 Ludwigshafen (DE)**
- **SEIP, Klaus**
  **67056 Ludwigshafen (DE)**

(74) Vertreter: **BASF IP Association**
**BASF SE**
**GBI - Z078**
**67056 Ludwigshafen (DE)**

(56) Entgegenhaltungen:
**EP-A1- 0 181 739**
**EP-A1- 2 385 030**
**EP-A1- 2 468 789**
**EP-A2- 0 353 062**
**WO-A1-01/70647**
**WO-A1-2017/076807**
**WO-A1-2017/212044**
**WO-A1-98/12248**
**DE-A1- 4 134 550**
**DE-U1- 29 620 553**
**DE-U1- 29 809 981**
**JP-A- 2004 189 309**
**US-A1- 2003 125 404**
**US-A1- 2014 343 194**
**US-B2- 9 174 881**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 728 158 B1

(52) Gemeinsame Patentklassifikation (CPC): (Forts.)

C-Sets
**C04B 26/02, C04B 22/0093, C04B 2103/40;**
**C04B 26/16, C04B 22/008, C04B 2103/0051,**
**C04B 2103/14, C04B 2103/20, C04B 2103/22,**
**C04B 2103/24, C04B 2103/40;**
**C04B 28/06, C04B 24/24, C04B 38/10,**
**C04B 2103/40;**
**C04B 28/065, C04B 24/282, C04B 2103/0051,**
**C04B 2103/14, C04B 2103/20, C04B 2103/22,**
**C04B 2103/24, C04B 2103/40**

## Beschreibung

Die Erfindung betrifft einen mehrteiligen Kit, der als einen ersten Teil die schäumbare stabilisierte wässrige Suspension und als einen zweiten Teil einen Härtungsaktivator umfasst,der durch Zusatz eines Härtungsaktivators aktivierbar ist, zur Herstellung anorganisch-organischer Hybridschäume

Zum Verfüllen von Spalten und Hohlräumen im Baugewerbe, insbesondere beim Einbau von Fenster und Türen im Neubau und bei der Bausanierung, werden in großem Umfang Bauschäume und Formteile auf der Basis von Polyurethanschäumen (PUR) verwendet. Die meisten kommerziellen PUR-Schäume basieren auf Methylendiphenylisocyanaten (MDI). Dieser Stoff ist als krebserregend nach EG-Kategorie 2 eingestuft. MDI und MDI enthaltende Mischungen müssen seit Dezember 2010 mit Gefahrhinweisen und Piktogrammen gekennzeichnet werden. So müssen Mischungen mit mehr als 0,1 % MDI mit dem Hinweis "Kann allergische Hautreaktionen verursachen" (H317); Mischungen mit mehr als 1 % MDI mit "Kann vermutlich Krebs erzeugen" (H351) versehen werden. Außerdem muss dieser Bauschaum bei seiner Entsorgung als Sondermüll behandelt werden.

Es ist wünschenswert, über Bauschäume ohne sensibilisierende oder potentiell krebserzeugende Inhaltsstoffe zu verfügen. Leider weisen Bauschäume auf der Basis anderer Ausgangsmaterialien bislang schlechtere Parameter hinsichtlich Aushärtezeiten und erzielbarer mechanischer Festigkeiten auf. Viele Schäume erreichen nicht die von der Association of European Adhesive Manufacturers (FEICA) festgelegten Anforderungen. Das Ausfüllen von Fugen und Spalten mit Leichtbetonen oder -mörtel ist oft schwierig. Zementäre Schäume weisen aufgrund ihrer Sprödigkeit keine ausreichenden Festigkeits- und Klebeeigenschaften auf.

Die WO 98/12248 offenbart eine schäumbare Zusammensetzung, die eine wässrige Emulsion eines filmbildenden Polymers, ein flüssiges Treibmittel und einen festen, lipophilen nichtionischen grenzflächenaktiven Stoff umfasst. Die Zusammensetzung schäumt nach dem Ausbringen aus beispielsweise einer Sprühdose auf und kann als Dichtungs- oder Isoliermasse verwendet werden. Die die Härtung lediglich auf einem physikalischen Abbinden beruht, können mit der bekannten Zusammensetzung keine ausreichenden mechanischen Festigkeiten für bestimmte Anwendungen erreicht werden. Abhängig von den klimatischen Bedingungen von Temperatur und Luftfeuchte kann das Aushärten zu lange dauern.

Die WO 01/70647 offenbart ein Verfahren zur Herstellung eines hydraulischen Bindemittelschaums, wobei ein wässriger Schaum aus Wasser und einem hydrophilen Polymer hergestellt und mit feinteiligem hydraulischen Binder gemischt wird. Das Vermischen eines Schaums mit einem Feststoff ist jedoch technisch nicht leicht zu bewerkstelligen. Ein Zwei-Komponenten-Bauschaum auf dieser Basis ist umständlich und aufwändig handzuhaben; das Einhalten von vorgegebenen Mischverhältnissen ist schwierig und es können sich leicht Fehldosierungen einstellen.

Weitere Alternativen zur Vermeidung toxischer Isocyanate bedienen sich Silan-terminierter Präpolymere. Ein bekanntes Beispiel ist Soudafoam SMX®. Soudafoam SMX® ist ein an Umgebungsfeuchte härtendes System.

Die US 2014/0343194 beschreibt stabilisierte wässrige Schnellzementsuspensionen mit hoher Lagerstabilität. Sie enthalten eine phosphorhaltige Verbindung, wie Phosphorsäure, zur Passivierung des Schnellzements. Die Reaktivierung des Zements erfolgt durch Anheben des pH-Wertes.

US 2003/125404 offenbart eine Vorrichtung zur Herstellung einer schäumbaren zement-ösen Zusammensetzung. Es wird eine pumpbare zementhaltige Aufschlämmung gebildet und die Aufschlämmung wird mit einem Gas wie Luft gemischt und mechanisch erzeugten Turbulenzen ausgesetzt, um Gasblasen zu erzeugen und einen Schaum zu erzeugen, der vorzugsweise durch ein Schaumstabilisierungsmittel wie Polyvinylalkohol stabilisiert wird. Der Schaum wird dann zu einer Düse oder einem anderen geeigneten Abgabepunkt befördert, von dem aus er aufgebracht wird. Vor der Abgabe wird vorzugsweise ein fester Beschleuniger injiziert, wodurch der Schaum geliert, was wiederum die Aufhängbarkeit des Produkts auf einem Substrat verbessert. Das Sprühmaterial haftet auf dem Substrat und härtet aus, um eine isolierende Beschichtung auf dem Substrat zu bilden.

EP 0 181 739 offenbart (A. 1-9, 10, 16, 17, 1D8, 20; Bsp. 17 (inkl. Bsp. 1), 18, 19) eine mineralische Zusammensetzung, die mindestens 25 Gew.-% 4CaO*3Al2O3*SO3 (=CSA-Binder), weniger als 0,2 Gew.-% freien Kalk, weniger als 5 Gew.-% CaO*2Al2O3, nicht mehr als 5 Gew.-% 12CaO*7Al2O3, bis zu 60 Gew.-% CaO*Al2O3, weniger als 5 Gew.-% CaO*TiO2, weniger als 10 Gew.-% Ferritphase, weniger als 20 Gew.-% CaO*Al2O3 enthält und eine CaSO4-Phase im Wesentlichen fehlt. Es wird jedoch kein organisches Bindemittel und kein Schaumbildner als Teil der Zusammensetzung offenbart.

EP 0 353 062 und WO2017/212044 offenbaren mehrteilige Kits, die in einem Teil ein Bindemittel basierend auf CAC oder CSA beinhalten können.

Der vorliegenden Erfindung liegt die Aufgabe zugrunde, die Nachteile des Standes der Technik zu vermeiden und Bauschäume zur Verfügung zu stellen, die auf sensibilisierende, krebserzeugende, mutagene oder reproduktionstoxische Inhaltsstoffe verzichten, leicht auszubringen sind und nach dem Härten ausreichende mechanische Festigkeit aufweisen.

Die Aufgabe wird gelöst durch ein mehrteiliges Kit, umfassend als einen ersten Teil eine schäumbare stabilisierte wässrige Suspension zur Herstellung anorganisch-organischer Hybridschäume und als einen zweiten Teil einen Härtungsaktivator für die schäumbare stabilisierte wässrige Suspension, wobei die schäumbare stabilisierte wässrige Suspension, enthält

a) einen inhibierten hydraulischen Binder, ausgewählt unter Calciumaluminatzement, Calciumsulfoaluminatzement und Gemischen davon, wobei der hydraulische Binder mittels eines Abbinde-Inhibitors inhibiert ist, der ausgewählt ist unter Borsäure, Sauerstoffsäuren des Phosphors und Salzen davon;
b) einen organischen Binder; und
c) einen Schaumbildner;

und der Härtungsaktivator ein Alkalisierungsmittel ist.

Die schäumbare stabilisierte wässrige Suspension nach eignet sich nach dem Schäumen und Aktivierung zum Füllen von Spalten und Hohlräumen, zur Abdichtung, zur thermischen Dämmung, zur akustischen Dämmung, als Klebstoff oder als Beschichtung. Sie eignet sich außerdem zur Herstellung vorgefertigter Bauteile, zur Verankerung und/oder Verfestigung, als Membran oder zum Brandschutz.

Unter "stabilisierter Suspension" wird eine Suspension verstanden, die bei Umgebungstemperatur wenigstens einen Monat, vorzugsweise wenigstens sechs Monate und besonders bevorzugt wenigstens ein Jahr, flüssig bleibt und nicht abbindet. Die Härtung wird kontrolliert durch einen nachstehend beschriebenen Härtungsaktivator ausgelöst.

Die schäumbare stabilisierte wässrige Suspension enthält einen hydraulischen Binder, der als wässrige Suspension vorliegt. Dabei handelt es sich um Aluminatzemente, nämlich Calciumaluminatzement, Calciumsulfoaluminatzement oder ein Gemisch davon.

Aluminatzemente sind Kombinationen von Aluminumoxid $Al_2O_3$, abgekürzt als "A" in der Zementnomenklatur, mit Calciumoxid CaO, "C" in der Zementnomenklatur, in solchen Mengen, dass C+A wenigstes 20% bis 100% des Gesamtgewichts des Zements ausmachen. Calciumsulfoaluminatzement entsprechen Verbindungen mit Calciumoxid (CaO, "C"), Aluminumoxid ($Al_2O_3$, "A") und Schwefeloxid ("S") in solchen Mengen, dass C+A+S wenigstens 10% bis 100% des Gesamtgewichts des Zements ausmachen.

Die Suspension kann neben dem Aluminatzement auch weitere puzzolanische Materialien wie Schlacke, Hüttensande, Mikrosilika und Flugasche enthalten. Die Menge an weiteren puzzolanischen Materialien muss so bemessen sein, dass die Eigenschaften des Bindemittels nicht signifikant beeinträchtigt werden.

Damit der hydraulische Binder nicht vorzeitig härtet oder die Viskosität der Suspension ansteigt, ist der hydraulische Binder im Allgemeinen durch Zusatz eines Abbinde-Inhibitors (Blockierungsmittel) inhibiert. Der Abbinde-Inhibitor dient zur Passivierung des hydraulischen Binders, um zu verhindern, dass dieser vorzeitig abbindet. Der Abbinde-Inhibitor verhindert die Auflösung der Zementphase, die dem Abbinden vorangeht.

Geeignete Abbinde-Inhibitoren sind Sauerstoffsäuren des Phosphors, wie ortho-Phosphorsäure, meta-Phosphorsäure, Phosphonsäure (phosphorige Säure); Organophosphate, oder Borverbindungen wie Borax oder Borsäure.

Geeignete Abbinde-Inhibitoren sind auch Derivate der Sauerstoffsäuren des Phosphors, die in wässrigem Medium diese Säuren bilden. Beispiele hierfür sind Phosphorpentoxid, Phosphortrioxid, Pyrophosphorsäure oder Tripolyphosphorsäure. Geeignete Phosphonsäurederivate sind beispielsweise Aminotrimethylenphosphonsäure, Aminoethylphosphonsäure, 1-Hydroxyethyliden-1,1-diphosphonsäure, Tetramethylendiamintetramethylenphosphonsäure, Hexaamethylendiamin-tetramethylenphosphonsäure, Diethylentriamin-pentamethylenphosphonsäure, Phosphonobutantricarbonsäure, N-(Phosphonomethyl)iminodiessigsäure, 2-Carboxyethylphosphonsäure oder 2-Hydroxyphosphonocarbonsäure. Bevorzugte Inhibitoren sind Borsäure und ortho-Phosphorsäure.

Zur Zubereitung des inhibierten hydraulischen Binders kann eine wässrige Lösung des Abbinde-Inhibitors vorgelegt und das hydraulische Bindemittel in die wässrige Lösung eingebracht werden, zweckmäßigerweise unter Rühren.

Suspensionen inhibierter hydraulischer Binder auf Basis von Aluminatzement sind im Handel erhältlich, z. B. unter der Bezeichnung Exalt® von Kerneos, Frankreich.

Vorzugsweise enthält die schäumbare stabilisierte wässrige Suspension außerdem einen Verzögerer des Abbindens des Aluminatzements. Der Verzögerer gestattet die Einstellung einer ausreichenden Verarbeitungsspanne, sobald der inhibierte hydraulische Binder aktiviert wurde.

Geeignete Verzögerer sind Lignosulfonate; Cellulosederivate, wie Hydroxyethylcellulose, Carboxymethylhydroxyethylcellulose; Hydroxycarbonsäuren, wie Weinsäure, Gluconsäure, Gluconate, wie Natriumgluconat, Gluconsäurelacton, Heptonsäure, Citronensäure, Gallussäure, Pyrogallol, Äpfelsäure, Tartronsäure, 2,4,6-Trihydroxybenzoesäure sowie Alkalisalze davon; synthetische Verzögerer, wie 2-Acrylamido-2-methyl-propansulfonsäure (AMPS)-Copolymere; und anorganische Verbindungen, wie ZnO.

Als Verzögerer eignet sich z.B. das unter der Bezeichnung Lohtragon SCI Plus von Dr. Paul Lohmann GmbH, Emmerthal, Deutschland, erhältliche Erzeugnis (Trinatriumcitrat-2-hydrat).

Vorzugsweise enthält die schäumbare stabilisierte wässrige Suspension außerdem einen Härtungsbeschleuniger. Alternativ kann der Härtungsbeschleuniger ganz oder teilweise dem Härtungsaktivator beigefügt sein. Der Härtungsbeschleuniger dient der raschen und vollständigen Härtung des hydraulischen Binders, sobald die Härtung durch Zugabe des Härtungsaktivators initiiert wird, gegebenenfalls nach einer durch Zusatz eines Verzögerers einstellbaren Verarbeitungsspanne. In die Suspension, die den inhibierten hydraulischen Binder enthält, wird dann mindestens ein Härtungsbeschleuniger eingebracht. Der Härtungsbeschleuniger ist vorzugsweise ausgewählt unter Lithiumcarbonat, Lithiumsulfat, Lithiumacetat, Lithiumsilikat, Natriumcarbonat, Natriumsulfat, Natriumsilikat, Natriumaluminat, Kaliumchlorid, Kaliumsilikat, Calciumformiat, Calciumchlorid, Caiciumsilikathydrat, Calciumaluminat, und Aluminiumsalzen wie Aluminiumsulfat und Gemischen davon.

Als Härtungsbeschleuniger eignen sich beispielsweise die unter der Bezeichnung Lohtragon LCA 261, Lohtragon LCA 332 und Lohtragon LCA 442 von Dr. Paul Lohmann GmbH, Emmerthal, Deutschland, erhältlichen Erzeugnisse. Weiterhin eignet sich Peramin AXL 80 von Kerneos, Frankreich.

Als Schaumbildner kommen in geeigneter Weise solche zum Einsatz, die unter Bedingungen hoher Ionenstärke und/oder hohen pH-Werten effektiv sind und stabile Schäume bilden. Geeignete Schaumbildner sind unter oberflächenaktiven Substanzen, hydrophilen Polymeren, proteinischen Schaumbildnern und Gemischen davon ausgewählt.

Geeignete oberflächenaktive Substanzen sind z.B. Alkylpolyglycoside, wie Decylpolyglucosidhydroxypropylsulfonat-Natriumsalz, Laurylpolyglucosidhydroxypropylsulfonat-Natriumsalz, Cocopolyglucosidhydroxypropylsulfonat-Natriumsalz, Laurylpolyglucosidsulfosuccinat-Dinatriumsalz, Decylpolyglucosidsulfosuccinat-Dinatriumsalz, Laurylpolyglucosidbis-hydroxyethylglycinat-Natriumsalz, Cocopolyglucosidbishydroxyethylglycinat-Natriumsalz; Polycarboxylat-Tenside, wie Copolymere von Maleinsäure und Diisobutylen; Fettalkoholethoxylate, wie Cetylakohol-(2)-ethoxylat.

Bevorzugte oberflächenaktive Substanzen sind anionische oberflächenaktive Substanzen und nichtionische oberflächenaktive Substanzen oder Gemische davon. Bevorzugte nichtionische oberflächenaktive Substanzen können durch ihren HLB-Wert (hydrophilic-lipophilic balance) charakterisiert werden. Der HLB-Wert der nichtionischen oberflächenaktiven Substanzen liegt üblicherweise im Bereich von 1 bis 20, vorzugsweise 3 bis 16 insbesondere 7 bis 15.

Geeignete hydrophile Polymere sind z.B. modifizierte Stärken, Hydrogele, z.B. Homo- und Copolymere von (Meth)acrylsäure, Polyacrylamid-acrylatcopolymere und Polyvinylakohol.

Geeignete proteinische Schaumbildner sind sowohl pflanzliche als auch tierische Proteine oder Mischungen davon. Beispiele für geeignete proteinische Schaumbildner sind Keratin, hydrolysiertes Keratin, Kollagen, hydrolysiertes Kollagen oder sojabasierte Proteine oder Gelatine.

Vorzugsweise enthält die schäumbare stabilisierte wässrige Suspension außerdem einen Schaumstabilisator. Schaumstabilisatoren stabilisieren die Zellwände des Schaums und verhindern ein rasches Einfallen des Schaums. Geeignete Schaumstabilisatoren sind ausgewählt unter Fettsäuresalzen, wie Alkalistearaten, Ammoniumstearat, Fettalkoholen, Fettsäurealkanolamiden, Aminoxiden, Phosphinoxiden, Fettsäureamidopropylbetainen, Fettsäuretauriden Celluloseethern, Siliconpolyethercopolymere, Blockcopolymeren aus Ethylenoxid und Propylenoxid, wie Poloxamere, wobei in bevorzugten Poloxameren von 2 bis 130 Ethylenoxid-Einheiten und 10 bis 70 Propylenoxid-Einheiten enthalten sind. Als Schaumstabilisator besonders bevorzugt ist Ammoniumstearat.

Die schäumbare stabilisierte wässrige Suspension enthält einen organischen Binder. Der organische Binder verleiht dem gehärteten Schaum erwünschte Eigenschaften wie verbesserte Festigkeits- und Klebeeigenschaften, Flexibilität und Abdichtvermögen. Daneben stabilisiert der organische Binder die Zellstruktur der geschäumten Suspension und verhindert ein vorzeitiges Einfallen des Schaums vor dem endgültigen Abbinden des hydraulischen Binders.

Der organische Binder ist ein natürliches oder synthetisches Polymer oder Copolymer. Das Polymer oder Copolymer ist bevorzugt aus ethylenisch ungesättigten Verbindungen in einpolymerisierter Form aufgebaut. Die Herstellung dieser Polyadditionsverbindungen erfolgt in der Regel durch dem Fachmann geläufige metallkomplexkatalysierte, anionisch katalysierte, kationisch katalysierte und besonders bevorzugt durch radikalisch katalysierte Polymerisation ethylenisch ungesättigter Verbindungen.

Der organische Binder kann in Form einer wässrigen Polymerdispersion, die im Allgemeinen 30 bis 80 Gew.-%, insbesondere 50 bis 70 Gew.-% an Polymer, bezogen auf die Gesamtmenge der Polymeremulsion, enthält, zur Anwendung kommen. Der organische Binder kann aber auch in Form eines Polymerpulvers eingesetzt werden.

Als organischer Binder kommen auch wässrige Polyurethan-Dispersionen in Betracht.

Der organische Binder kann eine Glasübergangstemperatur Tg im Bereich von -50 bis 50 °C, vorzugsweise -10 bis 25 °C, aufweisen. Unter Glasübergangstemperatur Tg wird die Midpoint Temperature nach ASTM D 3418-12 verstanden, ermittelt durch Differentialthermoanalyse (DSC; Aufheizrate: 20 K/min) [vgl. auch Ullmann's Encyclopedia of Industrial Chemistry, Seite 169, Verlag Chemie, Weinheim, 1992 und Zosel in Farbe und Lack, 82, Seiten 125 bis 134, 1976].

Nach Fox (T.G. Fox, Bull. Am. Phys. Soc. 1956 [Ser. II] 1, Seite 123 und gemäß Ull-mann's Encyclopädie der technischen Chemie, Bd. 19, Seite 18, 4. Auflage, Verlag Chemie, Weinheim, 1980) kann die Glasübergangstemperatur von höchstens schwach vernetzten Mischpolymerisaten in guter Näherung nach folgender Gleichung abgeschätzt werden kann

$$1/Tg = x^1/Tg^1 + x^2/Tg^2 + .... x^n/Tg^n,$$

wobei $x^1$, $x^2$, .... $x^n$ die Massenbrüche der Monomeren 1, 2, .... n und $Tg^1$, $Tg^2$, .... $Tg^n$ die Glasübergangstemperaturen der jeweils nur aus einem der Monomeren 1, 2, .... n aufgebauten Homopolymerisate in Kelvin bedeuten. Die Glasübergangstemperaturen dieser Homopolymerisate der meisten ethylenisch ungesättigten Monomere sind bekannt (bzw. können in einfacher an sich bekannter Weise experimentell ermittelt werden) und beispielsweise in J. Brandrup, E.H. Immergut, Polymer Handbook 1st Ed. J. Wiley, New York, 1966, 2nd Ed. J. Wiley, New York, 1975 und 3rd Ed. J. Wiley, New York, 1989, sowie in Ullmann's Cncyclopedia of Industrial Chemistry, Seite 169, Verlag Chemie, Weinheim, 1992, aufgeführt.

Mit besonderem Vorteil liegen die Dispersionspolymerisate in Form von Teilchen mit einem mittleren Teilchendurchmesser 10 bis 1000 nm, vorteilhaft 30 bis 600 nm und besonders vorteilhaft 50 bis 400 nm, bestimmt nach der Methode der quasielastische Lichtstreuung (ISO-Norm 13 321; cumulant z-average), vor.

Die radikalisch katalysierte Polymerisation von ethylenisch ungesättigten Verbindungen ist dem Fachmann geläufig und erfolgt insbesondere nach der Methode der radikalischen Substanz-, Emulsions-, Lösungs-, Fällungs- oder Suspensionspolymerisation, wobei jedoch die radikalisch initiierte wässrige Emulsionspolymerisation besonders bevorzugt ist.

Die Durchführung von radikalisch initiierten Emulsionspolymerisationen von ethylenisch ungesättigten Verbindungen (Monomere) in einem wässrigen Medium ist bekannt [vgl. hierzu Emulsionspolymerisation in Encyclopedia of Polymer Science and Engineering, Vol. 8, Seiten 659 ff. (1987); D.C. Blackley, in High Polymer Latices, Vol. 1, Seiten 35 ff. (1966); H. Warson, The Applications of Synthetic Resin Emulsions, Kapitel 5, Seiten 246 ff. (1972); D. Diederich, Chemie in unserer Zeit 24, Seiten 135 bis 142 (1990); Emulsion Polymerisation, Interscience Publishers, New York (1965); DE-A 40 03 422 und Dispersionen synthetischer Hochpolymerer, F. Hölscher, Springer-Verlag, Berlin (1969)]. Die radikalisch initiierte wässrige Emulsionspolymerisation erfolgt üblicherweise dergestalt, dass man die Monomere, in der Regel unter Mitverwendung von Dispergierhilfsmitteln, wie Emulgatoren und/oder Schutzkolloiden, in wässrigem Medium dispers verteilt und mittels wenigstens eines wasserlöslichen radikalischen Polymerisationsinitiators polymerisiert. Häufig werden bei den erhaltenen wässrigen Polymerisatdispersionen die Restgehalte an nicht umgesetzten Monomeren durch chemische und/oder physikalische Nachbehandlung herabgesetzt, der Polymerisatfeststoffgehalt durch Verdünnung oder Aufkonzentration auf einen gewünschten Wert eingestellt oder der wässrigen Polymerisatdispersion weitere übliche Zusatzstoffe, wie beispielsweise schaum- oder viskositätsmodifizierende Additive zugesetzt.

Als Monomere kommen insbesondere in einfacher Weise radikalisch polymerisierbare Monomere in Betracht, wie beispielsweise Ethylen, vinylaromatische Monomere, wie Styrol, $\alpha$-Methylstyrol, o-Chlorstyrol oder Vinyltoluole, Vinylhalogenide, wie Vinylchlorid oder Vinylidenchlorid, Ester aus Vinylalkohol und 1 bis 18 C-Atome aufweisenden Monocarbonsäuren, wie Vinylacetat, Vinylpropionat, Vinyl-n-butyrat, Vinyllaurat und Vinylstearat, Ester aus vorzugsweise 3 bis 6 C-Atome aufweisenden $\alpha,\beta$-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufwei-senden Alkanolen, wie besonders Acrylsäure- und Methacrylsäuremethyl-, -ethyl-, -n-butyl-, -isobutyl-, pentyl-, -hexyl-, -heptyl-, -octyl-, -nonyl-, -decyl- und -2-ethylhexylester, Fumar- und Maleinsäuredimethylester oder -di-n-butylester, Nitrile $\alpha,\beta$-monoethylenisch ungesättigter Carbonsäuren, wie Acrylnitril, Methacrylnitril, Fumarsäuredinitril, Maleinsäuredinitril sowie C4-8-konjugierte Diene, wie 1,3-Butadien und Isopren. Die genannten Monomere bilden in der Regel die Hauptmonomeren, die, bezogen auf die zur Herstellung des Dispersionspolymerisats eingesetzte Menge aller ethylenisch ungesättigter Verbindungen (Gesamtmonomerenmenge), einen Anteil $\geq$ 50 Gew.-%, bevorzugt $\geq$ 80 Gew.-% und insbesondere bevorzugt $\geq$ 90 Gew.-% auf sich vereinen. In aller Regel weisen diese Monomeren in Wasser bei Normalbedingungen [20 °C, 1 atm (= 1,013 bar absolut)] lediglich eine mäßige bis geringe Löslichkeit auf.

Monomere, die unter den vorgenannten Bedingungen eine erhöhte Wasserlöslichkeit aufweisen, sind solche, die entweder wenigstens eine Säuregruppe und/oder deren entsprechendes Anion bzw. wenigstens eine Amino-, Amido-, Ureido- oder N-heterocyclische Gruppe und/oder deren am Stickstoff protonierten oder alkylierten Ammoniumderivate enthalten. Beispielhaft genannt seien $\alpha,\beta$-monoethylenisch ungesättigte Mono- und Dicarbonsäuren und deren Amide, wie z.B. Acrylsäure, Methacrylsäure, Maleinsäure, Fumarsäure, Itaconsäure, Acrylamid und Methacrylamid, ferner Vinylsulfonsäure, 2-Acrylamido-2-methylpropansulfonsäure, Styrolsulfon-säure und deren wasserlösliche Salze sowie N-Vinylpyrrolidon, 2-Vinylpyridin, 4-Vinylpyridin, 2-Vinylimidazol, 2-(N,N-Dimethylamino)ethylacrylat, 2-(N,N-Dimethylamino)ethylmethacrylat, 2-(N,N-Diethylamino)ethylacrylat, 2-(N,N-Diethylamino)ethylmethacrylat, 2-(N-tert.-Butylamino)ethylmethacrylat, N-(3-N',N'-Dimethylaminopropyl)methacrylamid und 2-(1-Imidazolin-2-onyl)ethylmethacrylat. Im Normalfall sind die vorgenannten Monomeren lediglich als modifizierende Monomere in Mengen $\leq$ 10 Gew.-% und bevorzugt $\leq$ 5 Gew.-%, bezogen auf die Gesamtmonomerenmenge, enthalten.

Monomere, die üblicherweise die innere Festigkeit der Verfilmungen der Polymermatrix erhöhen, weisen normalerweise wenigstens eine Epoxy-, Hydroxy-, N-Methylol-, Silan- oder Carbonylgruppe, oder wenigstens zwei nicht konjugierte ethylenisch ungesättigte Doppelbindungen auf. Beispiele hierfür sind Glycidylmethacrylat, Acetoacetoxyethylmethacrylat, Methacryloxypropyltrimethoxysilan, Vinyltriethoxysilan, sowie zwei Vinylreste aufweisende Monomere, zwei Vinylidenreste aufweisende Monomere sowie zwei Alkenylreste aufweisende Monomere. Besonders vorteilhaft sind dabei die Di-Ester zweiwertiger Alkohole mit α,β-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und -dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylate und Ethylengly-koldimethacrylat, 1,2-Propylenglykoldimethacrylat, 1,3-Propylenglykoldimethacrylat, 1,3-Butylenglykoldimethacrylat, 1,4-Butylenglykoldimethacrylat sowie Divinylbenzol, Vinylmethac-rylat, Vinylacrylat, Allylmethacrylat, Allylacrylat, Diallylmaleat, Diallylfumarat, Methylenbisacrylamid, Cyclopentadienylacrylat, Triallylcyanurat oder Triallylisocyanurat. In diesem Zusam-menhang von besonderer Bedeutung sind auch die Methacrylsäure- und Acrylsäure-$C_1$-$C_8$-Hydroxyalkylester wie n-Hydroxyethyl-, n-Hydroxypropyl- oder n-Hydroxybutylacrylat und - methacrylat sowie Verbindungen, wie Diacetonacrylamid und Acetylacetoxyethylacrylat bzw. -methacrylat. Häufig werden die vorgenannten Monomeren in Mengen ≤ 5 Gew.-%, bevorzugt jedoch in Mengen ≤ 3 Gew.-%, jeweils bezogen auf die Gesamtmonomerenmenge, eingesetzt.

Erfindungsgemäß vorteilhaft werden wässrige Polymerisatdispersionen eingesetzt, deren Dispersionspolymerisat

50 bis 99,9 Gew.-% Ester der Acryl- und/oder Methacrylsäure mit 1 bis 12 C-Atome aufweisenden Alkanolen und/oder Styrol, oder

40 bis 99,9 Gew.-% Styrol und/oder Butadien, oder

50 bis 99,9 Gew.-% Vinylchlorid und/oder Vinylidenchlorid, oder

40 bis 99,9 Gew.-% Vinylacetat, Vinylpropionat und/oder Ethylen

in einpolymerisierter Form enthalten.

Insbesondere vorteilhaft werden erfindungsgemäß solche wässrige Polymerisatdispersionen eingesetzt, deren Dispersionspolymerisate

0,1 bis 5 Gew.-% wenigstens eine 3 bis 6 C-Atome aufweisende α,β-monoethylenisch ungesättigte Mono- und/oder Dicarbonsäure und/oder deren Amid, und

50 bis 99,9 Gew.-% wenigstens eines Esters der Acryl- und/oder Methacrylsäure mit 1 bis 12 C-Atome aufweisenden Alkanolen und/oder Styrol,
oder

0,1 bis 5 Gew.-% wenigstens eine 3 bis 6 C-Atome aufweisende α,β-monoethylenisch ungesättigte Mono- und/oder Dicarbonsäure und/oder deren Amid, und 40 bis 99,9 Gew.-% Styrol und/oder Butadien,
oder

0,1 bis 5 Gew.-% wenigstens eine 3 bis 6 C-Atome aufweisende α,β-monoethylenisch ungesättigte Mono- und/oder Dicarbonsäure und/oder deren Amid, und 50 bis 99,9 Gew.-% Vinylchlorid und/oder Vinylidenchlorid,
oder

0,1 bis 5 Gew.-% wenigstens eine 3 bis 6 C-Atome aufweisende α,β-monoethylenisch ungesättigte Mono- und/oder Dicarbonsäure und/oder deren Amid, und 40 bis 99,9 Gew.-% Vinylacetat, Vinylpropionat und/oder Ethylen

in einpolymerisierter Form enthalten.

Die radikalisch initiierte wässrige Emulsionspolymerisation zur Herstellung der Dispersionspolymerisate wird in der Regel in Gegenwart von 0,1 bis 5 Gew.-%, vorzugsweise 0,1 bis 4 Gew.-% und insbesondere 0,1 bis 3 Gew.-%, jeweils bezogen auf die Gesamtmonomerenmenge, eines radikalischen Polymerisationsinitiators (Radikalinitiator) durchgeführt. Als Radikalinitiatoren kommen alle diejenigen in Betracht, die in der Lage sind, eine radikalische wässrige Emulsionspolymerisation auszulösen. Es kann sich dabei prinzipiell sowohl um Peroxide als auch um Azoverbindungen handeln. Selbstverständlich kommen auch Redoxinitiatorsysteme in Betracht. Als Peroxide können prinzipiell anorganische Peroxide, wie Wasserstoffperoxid oder Peroxodisulfate, wie die Mono- oder Di-Alkalimetall- oder Ammoniumsalze

der Peroxodischwe-felsäure, wie beispielsweise deren Mono- und Di-Natrium-, -Kalium- oder Ammoniumsalze oder organische Peroxide, wie Alkylhydroperoxide, beispielsweise tert.-Butyl-, p-Menthyl- oder Cumylhydroperoxid, sowie Dialkyl- oder Diarylperoxide, wie Di-tert.-Butyl- oder DiCumylperoxid eingesetzt werden. Als Azoverbindung finden im Wesentlichen 2,2'-Azo-bis(isobutyronitril), 2,2'-Azobis(2,4-dimethylvaleronitril) und 2,2'-Azobis(amidinopro-pyl)dihydrochlorid (AIBA, entspricht V-50 von Wako Chemicals) Verwendung. Selbstverständlich können auch sogenannte Redoxinitiatorensysteme als Radikalinitiatoren eingesetzt werden. Als Oxidationsmittel für Redoxinitiatorsysteme kommen im Wesentlichen die oben genannten Peroxide in Betracht. Als entsprechende Reduktionsmittel können Schwefelverbindungen mit niedriger Oxidationsstufe, wie Alkalisulfite, beispielsweise Kalium- und/oder Natriumsulfit, Alkalihydrogensulfite, beispielsweise Kalium- und/oder Natriumhydrogensulfit, Alkalimetabisulfite, beispielsweise Kalium- und/oder Natriummetabisulfit, Formaldehydsulfoxylate, beispielsweise Kalium- und/oder Natriumformaldehydsulfoxylat, Alkalisalze, speziell Kalium- und/oder Natriumsalze aliphatische Sulfinsäuren und Alk-limetallhydrogensulfide, wie beispielsweise Kalium- und/oder Natriumhydrogensulfid, Salze mehrwertiger Metalle, wie Eisen-(II)-sulfat, Eisen-(II)-Ammoniumsulfat, Eisen-(II)-phosphat, Endiole, wie Dihydroxymaleinsäure, Benzoin und/oder Ascorbinsäure sowie reduzierende Saccharide, wie Sorbose, Glucose, Fructose und/oder Dihydroxyaceton eingesetzt werden.

Üblicherweise werden bei der Herstellung der Dispersionspolymerisate durch radikalisch initiierten wässrigen Emulsionspolymerisation Dispergierhilfsmittel mitverwendet, die sowohl die Monomerentröpfchen als auch Polymerisatteilchen in der wässrigen Phase dispers verteilt halten und so die Stabilität der erzeugten wässrigen Dispersionen der Dispersionspolymerisate gewährleisten. Als solche kommen sowohl die zur Durchführung von radikalischen wässrigen Emulsionspolymerisationen üblicherweise eingesetzten Schutzkolloide als auch Emulgatoren in Betracht.

Geeignete Schutzkolloide sind beispielsweise Polyvinylalkohole, Cellulosederivate oder Vinylpyrrolidon enthaltende Copolymerisate. Eine ausführliche Beschreibung weiterer geeigneter Schutzkolloide findet sich in Houben-Weyl, Methoden der organischen Chemie, Band XIV/1, Makromolekulare Stoffe, Seiten 411 bis 420, Georg-Thieme-Verlag, Stuttgart, 1961. Selbstverständlich können auch Gemische aus Emulgatoren und/oder Schutzkolloiden verwendet werden. Vorzugsweise werden als Dispergierhilfsmittel ausschließlich Emulgatoren eingesetzt, deren relative Molekulargewichte im Unterschied zu den Schutzkolloiden üblicherweise unter 1000 liegen. Sie können sowohl anionischer, kationischer oder nichtionischer Natur sein. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Im Allgemeinen sind anionische Emulgatoren untereinander und mit nichtionischen Emulgatoren verträglich. Desgleichen gilt auch für kationische Emulgatoren, während anionische und kationische Emulgatoren meistens nicht miteinander verträglich sind. Gebräuchliche Emulgatoren sind z.B. ethoxilierte Mono-, Di- und Tri-Alkylphenole (EO-Grad: 3 bis 50, Alkylrest: $C_4$ bis $C_{12}$), ethoxilierte Fettalkohole (EO-Grad: 3 bis 50; Alkylrest: C8 bis C36) sowie Alkalimetall- und Ammoniumsalze von Alkylsulfaten (Alkylrest: C8 bis C12), von Schwefelsäurehalbestern ethoxylierter Alkanole (EO-Grad: 4 bis 30, Alkylrest: $C_{12}$ bis $C_{18}$) und ethoxilierter Alkylphenole (EO-Grad: 3 bis 50, Alkylrest: $C_4$ bis $C_{12}$), von Alkylsulfonsäuren (Alkylrest: $C_{12}$ bis $C_{18}$) und von Alkylarylsulfonsäuren (Alkylrest: $C_9$ bis $C_{18}$). Weitere geeignete Emulgatoren finden sich in Houben-Weyl, Methoden der organischen Chemie, Band XIV/1, Makromolekulare Stoffe, Seiten 192 bis 208, Georg-Thieme-Verlag, Stuttgart, 1961.

Als grenzflächenaktive Substanzen haben sich ferner Verbindungen der allgemeinen Formel I

$R^1$ $R^2$ O $SO_3M^1$ $SO_3M^2$ (I) ,

worin $R^1$ und $R^2$ H-Atome oder $C_4$- bis $C_{24}$-Alkyl bedeuten und nicht gleichzeitig H-Atome sind, und $M^1$ und $M^2$ Alkalimetallionen und/oder Ammoniumionen sein können, als geeignet erwiesen. In der allgemeinen Formel (I) bedeuten $R^1$ und $R^2$ bevorzugt lineare oder verzweigte Alkylreste mit 6 bis 18 C-Atomen, insbesondere mit 6, 12 und 16 C-Atomen oder Wasserstoff, wobei $R^1$ und $R^2$ nicht beide gleichzeitig H-Atome sind. $M^1$ und $M^2$ sind bevorzugt Natrium, Kalium oder Ammonium, wobei Natrium besonders bevorzugt ist. Besonders vorteilhaft sind Verbindungen (I), in denen $M^1$ und $M^2$ Natrium, R1 ein verzweigter Alkylrest mit 12 C-Atomen und $R^2$ ein H-Atom oder R1 ist. Häufig werden technische Gemische verwendet, die einen Anteil von 50 bis 90 Gew.-% des monoalkylierten Produktes aufweisen, wie beispielsweise Dowfax® 2A1 (Marke der Dow Chemical Company). Die Verbindungen (I) sind allgemein bekannt, z.B. aus US-A 4269749, und im Handel erhältlich.

Vorteilhaft werden bei der Herstellung der Dispersionspolymerisate durch radikalisch initiierten wässrigen

Emulsionspolymerisation nichtionische und/oder anionische Emulgatoren verwendet. In der Polymerdispersion enthaltener überschüssiger Emulgator kann, nach Beigabe des inhibierten hydraulischen Binders, als Schaumbildner in der erfindungsgemäßen schäumbaren Suspension wirken. Wenn die Polymerdispersion wesentliche Mengen an überschüssigem Emulgator enthält, kann die bei der Herstellung der erfindungsgemäßen schäumbaren Suspension zugesetzte Menge an Schaumbildner reduziert werden oder es kein Zusatz an Schaumbildner nötig.

In der Regel beträgt die Menge an eingesetztem Dispergierhilfsmittel 0,1 bis 5 Gew.-%, bevorzugt 1 bis 3 Gew.-%, jeweils bezogen auf die Gesamtmonomerenmenge. Häufig ist es günstig, wenn eine Teil- oder die Gesamtmenge des Dispergierhilfsmittels dem wässrigen Reaktionsmedium vor der Initiierung der radikalischen Polymerisation zugeführt wird. Darüber hinaus kann eine Teil- oder die Gesamtmenge des Dispergierhilfsmittels dem wässrigen Reaktionsmedium vorteilhaft auch gemeinsam mit den Monomeren, insbesondere in Form einer wässrigen Monomerenemulsion während der Polymerisation zugeführt werden.

Radikalkettenübertragende Verbindungen werden üblicherweise eingesetzt, um das Molekulargewicht der durch eine radikalisch initiierte wässrige Emulsionspolymerisation zugänglichen Polymerisate A Dispersionspolymerisate zu reduzieren bzw. zu kontrollieren. Dabei kommen im Wesentlichen aliphatische und/oder araliphatische Halogenverbindungen, wie beispielsweise n-Butylchlorid, n-Butylbromid, n-Butyljodid, Methylenchlorid, Ethylendichlorid, Chloroform, Bromoform, Bromtrichlormethan, Dibromdichlormethan, Tetrachlorkohlenstoff, Tetrabromkohlenstoff, Benzylchlorid, Benzylbromid, organische Thioverbindungen, wie primäre, sekundäre oder tertiäre aliphatische Thiole, wie beispielsweise Ethanthiol, n-Propanthiol, 2-Propanthiol, n-Butanthiol, 2-Butanthiol, 2-Methyl-2-propanthiol, n-Pentanthiol, 2-Pentanthiol, 3-Pentanthiol, 2-Methyl-2-butanthiol, 3-Methyl-2-butanthiol, n-Hexanthiol, 2-Hexanthiol, 3-Hexanthiol, 2-Methyl-2-pentanthiol, 3-Methyl-2-pentanthiol, 4-Methyl-2-pentanthiol, 2-Methyl-3-pentanthiol, 3-Methyl-3-pentanthiol, 2-Ethylbutanthiol, 2-Ethyl-2-butanthiol, n-Heptanthiol und seine isomeren Verbindungen, n-Octanthiol und seine isomeren Verbindungen, n-Nonanthiol und seine isomeren Verbindungen, n-Decanthiol und seine isomeren Verbindungen, n-Undecanthiol und seine isomeren Verbindungen, n-Dodecanthiol und seine isomeren Verbindungen, n-Tridecanthiol und seine isomeren Verbindungen, substituierte Thiole, wie beispielsweise 2-Hydroxyethanthiol, aromatische Thiole, wie Benzolthiol, ortho-, meta-, oder para-Methylbenzolthiol, sowie alle weiteren im Polymerhandbook 3rd edtition, 1989, J. Brandrup und E.H. Immergut, John Weiley & Sons, Abschnitt II, Seiten 133 bis 141, beschriebenen Schwefelverbindungen, aber auch aliphatische und/oder aromatische Aldehyde, wie Acetaldeyhd, Propionaldehyd und/oder Benzaldehyd, ungesättigte Fettsäuren, wie Ölsäure, Diene mit nicht konjugierten Doppelbindungen, wie Divinylmethan oder Vinylcyclohexan oder Kohlenwasserstoffe mit leicht abstrahierbaren Wasserstoffatomen, wie beispielsweise Toluol, zum Einsatz. Es ist aber auch möglich, Gemische sich nicht störender vorgenannter radikalkettenübertragender Verbindungen einzusetzen.

Neben der saatfreien Herstellungsweise kann zur Einstellung der Polymerisatteilchengröße die Emulsionspolymerisation zur Herstellung der Dispersionspolymerisate P nach dem Saatlatex-Verfahren oder in Gegenwart eines in situ hergestellten Saatlatex erfolgen. Verfahren hierzu sind dem Fachmann bekannt und können dem Stand der Technik entnommen werden (siehe beispielsweise EP-B 40 419, EP-A 567 812, EP-A 614 922 sowie 'Encyclopedia of Polymer Science and Technology', Vol. 5, Seite 847, John Wiley & Sons Inc., New York, 1966). So empfiehlt der Stand der Technik, beim semikontinuierlichen Zulaufverfahren eine definierte feinteilige Saat-Polymerisatdispersion im Polymerisationsgefäß vorzulegen und dann die Monomeren in Gegenwart des Saatlatices zu polymerisieren. Hierbei wirken die Saat-Polymerisatteilchen als "Polymerisationskeime" und entkoppeln die Polymersatteilchenbildung und das Polymerisatteilchenwachstum. Während der Emulsionspolymerisation kann weitere Saatlatex direkt in den Polymerisationsreaktor zugegeben werden. Hierdurch werden breite Grö-ßenverteilungen der Polymerisatteilchen erreicht, die insbesondere bei Polymerisatdispersionen mit hohem Feststoffgehalt oftmals erwünscht sind (vgl. hierzu beispielsweise DE-A 4213965). Anstelle der Zugabe eines definierten Saatlatices kann dieser auch in situ erzeugt werden. Hierzu wird beispielsweise eine Teilmenge der zur Polymerisation eingesetzten Monomeren und des Radikalinitiators zusammen mit einer Teil- oder der Gesamtmenge des Emulgators vorgelegt und auf Reaktionstemperatur erwärmt, wobei eine relativ feinteilige Polymersaat entsteht. Anschließend wird im gleichen Polymerisationsgefäß die eigentliche Polymerisation nach dem Zulaufverfahren durchgeführt (siehe auch DE-A 4213965).

Vorteilhaft erfolgt Herstellung der Dispersionspolymerisate durch radikalisch initiierte wässrigen Emulsionspolymerisation bei einer Reaktionstemperatur im Bereich von 0 bis 170 °C, wobei jedoch Temperaturen von 70 bis 120 °C und insbesondere 80 bis 100 °C besonders bevorzugt sind. Die radikalische wässrige Emulsionspolymerisation kann bei einem Druck kleiner, gleich oder größer 1 atm (absolut) durchgeführt werden. Vorzugsweise werden leichtflüchtige Monomere wie Ethylen, Butadien oder Vinylchlorid unter erhöhtem Druck polymerisiert. Dabei kann der Druck 1,2, 1,5, 2, 5, 10, 15 bar (Überdruck) oder noch höhere Werte einnehmen. Werden Emulsionspolymerisationen im Unterdruck durchgeführt, werden Drücke von 950 mbar, häufig von 900 mbar und oft 850 mbar (absolut) eingestellt. Vorteilhaft wird die radikalische wässrige Emulsionspolymerisation bei 1 atm (= Atmosphärendruck = 1,013 bar absolut) unter Inertgasatmosphäre, wie beispielsweise unter Stickstoff oder Argon durchgeführt.

Wäßrige Polyurethan-Dispersionen bestehen aus Polyurethan-Polymeren bzw. Polyurethan-Polyharnstoff-Polymeren, die durch Polyadditions-Reaktionen von Polyolen, Polyisocyanaten und Polyaminen zugänglich sind. Aus

den Polyolen und den Polyisocyanaten werden zunächst Polyurethan-Prepolymere hergestellt, die dann in der wässrigen Phase dispergiert und mit Polyaminen unter Aufbau der Polyurethan-Polyharnstoff-Polymere kettenverlängert werden. Die Polyurethan-Polymere enthalten zudem eine ausreichende Menge an hydrophilen Gruppen, welche die Stabilisierung in der wässrigen Phase gewährleisten. Bei diesen hydrophilen Gruppen handelt es sich um anionische, kationische oder nicht-ionische Gruppen. Polyurethan-Dispersionen stellen Zweiphasen-Systeme dar, die aus Micellen mit Polyurethan-Polymeren und einer wässrigen Phase bestehen. Bei der Auftrocknung der Polyurethan-Dispersionen erfolgt eine Koaleszenz bzw. Verschmelzung der Micellen und eine Filmbildung bzw. Verfilmung der Polyurethan-Polymeren.

Die schäumbare stabilisierte wässrige Suspension kann auch Additive wie Rheologie-Modifikatoren, insbesondere Verdicker, Superplastifizierungsmittel, Hydrophobierungsmittel, Filmbildehilfsmittel, Weichmacher, Biozide und/oder Konservierungsmittel oder Kombinationen enthalten.

Als Verdicker können sowohl organische als auch anorganische Verdicker verwendet werden.

Geeignete organische Verdicker sind ausgewählt unter Celluloseethern, Stärkeethern, Polyacrylamiden und Assoziativverdicker. In einer weiteren Ausführungsform ist der Verdicker ausgewählt aus Polysaccharidderivaten und (Co)polymeren mit einem gewichtsmittleren Molekulargewicht Mw von mehr als 500.000 g/Mol, insbesondere mehr als 1.000.000 g/Mol. In einer weiteren Ausführungsform ist der Verdicker ausgewählt aus Celluloseethern, Stärkeethern und (Co)polymeren, die Struktureinheiten von nicht-ionischen (Meth)acrylamidmonomeren und/oder Sulfonsäuremonomeren und gegebenenfalls von weiteren Monomeren umfassen.

Geeignete Celluloseether sind Alkylcellulosen wie Methylcellulose, Ethylcellulose, Propylcellulose und Methylethylcellulose; Hydroxyalkylcellulosen wie Hydroxyethylcellulose (HEC), Hydroxypropylcellulose (HPC) und Hydroxyethylhydroxypropylcellulose; Alkylhydroxyalkylcellulosen wie Methylhydroxyethylzelluose (MHEC), Methylhydroxypropylzelluose (MHPC) und Propylhydroxypropylcellulose; und carboxylierte Celluloseether, wie Carboxymethylcellulose (CMC). Bevorzugt sind die nicht-ionischen Celluloseetherderivate, insbesondere Methylcellulose (MC), 20 Hydroxypropylcellulose (HPC), Hydroxyethylcellulose (HEC) und Ethylhydroxyethylcellulose (EHEC), und besonders bevorzugt sind Methylhydroxyethylcellulose (MHEC) und Methylhydroxypropylcellulose (MHPC). Die Celluloseetherderivate sind jeweils durch entsprechende Alkylierung und Alkoxylierung von Cellulose und im Handel erhältlich.

Geeignete Stärkeether sind nichtionische Stärkeether, wie Hydroxypropylstärke, Hydroxyethylstärke und Methylhydroxypropylstärke. Bevorzugt ist Hydroxypropylstärke. Geeignete Verdicker sind auch mikrobiell hergestellte Polysaccharide wie Welan Gum und/oder Xanthane und natürlich vorkommende Polysaccharide wie Alginate, Carrageenane und Galactomannane. Diese können aus entsprechenden Naturprodukten durch extraktive Verfahren gewonnen werden, wie 30 beispielsweise im Fall von Alginaten und Carrageenanen aus Algen, im Fall von Galactomannanen aus Johannesbrotbaumkernen.

(Co)polymere mit einem gewichtsmittleren Molekulargewicht MW von mehr als 500.000 g/mol, besonders bevorzugt mehr als 1.000.000 g/mol, können (vorzugsweise durch radikalische Polymerisation) aus nichtionischen (Meth)acrylamidmonomeren und/oder Sulfonsäuremonomeren hergestellt werden. In einer Ausführungsform sind die Monomere ausgewählt unter Acrylamid, Methacrylamid, N-Methylacrylamid, N-Methylmethacrylamid, N,N-Dimethylacrylamid, N-Ethylacrylamid, N,N-Diethylacrylamid, N-Cyclohexylacrylamid, N-Benzylacrylamid, N,N-Dimethylami-nopropylacrylamid, N,N-Dimethylaminoethylacrylamid und/oder N-tert.-Butylacrylamid und/oder Styrolsulfonsäure, 2-Acrylamido-2-methylpropansulfonsäure, 2-Methac-rylamido-2-methylpropansulfonsäure, 2-Acrylamidobutansulfonsäure und/oder 2-Ac-rylamido-2,4,4-trimethylpentansulfonsäure oder den Salzen der genannten Säuren. Vorzugsweise enthalten die (Co)polymere mehr als 50 mol-% und besonders bevorzugt mehr als 70 mol-% Struktureinheiten, die sich von nichtionischen (Meth)ac-rylamidmonomeren und/oder Sulfonsäuremonomeren ableiten. Andere Struktureinheiten, die in den Copolymeren enthalten sein können, sind beispielsweise von den Monomeren (Meth)acrylsäure, Estern von (Meth) acrylsäuren mit verzweigten oder unverzweigten $C_1$- bis $C_{10}$-Alkoholen, Vinylacetat, Vinylpropionat und/oder Styrol abgeleitet.

In einer weiteren Ausführungsform ist der Verdicker ausgewählt aus Methylcellulose, Hydroxypropylcellulose, Hydroxyethylcellulose, Ethylhydroxyethylcellulose, Hydroxypropylstärke, Hydroxyethylstärke, Methylhydroxypropylstärke, und (Co)polymeren, die Struktureinheiten enthalten, welche abgeleitet sind von Acrylamid, Methacrylamid, N,N-Dimethylacrylamid, 2-Acrylamido-2-methylpropansulfonsäure und gegebenenfalls (Meth)acrylsäure, Estern von (Meth) acrylsäuren mit verzweigten oder unverzweigten $C_1$- bis $C_{10}$-Alkoholen, Vinylacetat, Vinylpropionat und/oder Styrol.

Bevorzugt eingesetzt werden Assoziativverdicker, wie beispielsweise die an sich bekannten Polyurethan-Assoziativverdicker, wie Rheovis® oder PURE THIX, z.B. PURE THIX 1450 oder PURE THIX 1442. Diese Verdicker sind aufgebaut aus linearen und/oder verzweigten Polyethylenglycolblöcken und Hydrophobsegmenten, die in der Regel über Urethangruppen miteinander verknüpft sind.

Geeignete anorganische Verdicker sind beispielsweise Schichtsilicate, wie Montmorillonit, Hectorit oder Smektit. Geeignete Schichtsilikate sind z.B. Laponite RD (Deutsche Solvay GmbH); Optigel SH; SKS-20/Saponit; SKS-21/Hectorit. Als Verdicker eignen sich auch pyrogene Kieselsäuren wie Aerosil-Typen (Evonik Resource Efficiency GmbH).

Die schäumbare stabilisierte wässrige Suspension kann Füllstoffe, wie mineralische Füllstoffe, wie Quarzsand, Carbonate, Kaolin, Kalksteinmehl, Mikrosilika oder ein Gemisch von zwei oder mehreren davon als Komponente

enthalten. Vorzugsweise enthält die schäumbare stabilisierte wässrige Suspension Leichtfüllstoffe. In Abgrenzung zu anderen Füllstoffen besitzen Leichtfüllstoffe ein niedrigeres Schüttgewicht. Bevorzugte Leichtfüllstoffe haben ein Schüttgewicht von kleiner als 600 g/l, insbesondere kleiner als 500 g/l, ganz besonders kleiner als 400 g/l. Sie können auf synthetischer oder natürlicher Basis sein, wie Mikrohohlkugeln aus Glas, Polymeren wie Polystyrolkugeln, Alumosilikaten, Siliciumoxid, Aluminium-Siliciumoxid, Calcium-Silikathydrat, Siliciumdioxid, Aluminium-Silikat, Magnesium-Silikat, Aluminium-Silikathydrat, Calcium-Aluminium-Silikat, Calcium-Silikathydrat, Aluminium-Eisen-Magnesium-Silikat, Calciummetasilikat und/oder vulkanischer Schlacke. Die Form der Leichtfüllstoffe ist nicht beschränkt und kann insbesondere eine kugel-, plättchen-, stäbchen- und/oder lamellenförmige Struktur aufweisen. Bevorzugte Leichtfüllstoffe sind Mikrohohlkugeln aus Glas, Perlit, Cellit, Cabosil, Circosil, Eurocell, Fillite, Promaxon, Vermex und/oder Wollastonit.

Darüber hinaus können auch Fasern auf natürlicher oder synthetischer Basis zugegeben werden z.B. zur Verstärkung. Auch intumeszierende bzw. brandhemmende Füllstoffe können beigemischt werden wie z.B. Blähgraphit oder Aluminiumhydroxid oder Magnesiumhydroxid. Als Flammschutzmittel kommen weiter in Betracht bromierte Flammschutzmittel, wie Octabromdiphenylether, Decabromdiphenylether, chlorierte Flammschutzmitel, wie Tetrabrombisphenol A, Organophosphor-Flammschutzmittel (die halogeniert sein können), wie Tris(2-chlorisopropyl)phosphat, Tris(1,3-dichlorisop-ropyl)phosphat, oder Antimontrioxid.

Die schäumbare stabilisierte wässrige Suspension wird hergestellt durch Vermischen der Komponenten mit üblichen Mischtechniken und Mischvorrichtungen.

Die schäumbare stabilisierte wässrige Suspension weist im Allgemeinen einen Feststoffgehalt von 10 bis 90 Gew.-%, bevorzugt 40 bis 85 Gew.-% auf.

Gerechnet als Feststoff enthält die schäumbare stabilisierte wässrige Suspension den hydraulischen Binder und den organischen Binder im Allgemeinen in einem Gewichtsverhältnis von 10: 1 bis 1: 10, vorzugsweise 5:1 bis 1:5, insbesondere 1:2 bis 2:1.

Bezogen auf den Feststoffgehalt enthält die schäumbare stabilisierte wässrige Suspension im Allgemeinen:

0,1 bis 5 Gew.-%, vorzugsweise 0,5 bis 3 Gew.-%, Schaumbildner;
0 bis 7 Gew.-%, vorzugsweise 2 bis 7 Gew.-%, Schaumstabilisator.

Bezogen auf den Feststoffgehalt enthält die schäumbare stabilisierte wässrige Suspension im Allgemeinen:

0 bis 3 Gew.-%, vorzugsweise0,1 bis 0,5 Gew.-%, Verzögerer;
0 bis 15 Gew.-%, vorzugsweise 1 bis 9 Gew.-%, Härtungsbeschleuniger.

Die schäumbare stabilisierte wässrige Suspension weist im Allgemeinen eine Viskosität im Bereich von 500 mPas bis 9000 mPas auf, bestimmt mittels Brookfield DV1 Viskosimeter Spindel 6, 20 U/min, bei 23 °C. Viskositäten von 500 mPas bis 3000 mPas sind bevorzugt.

Zur Initiierung der Härtung wird die schäumbare stabilisierte wässrige Suspension mit einem Härtungsaktivator gemischt. Bei dem Härtungsaktivator handelt es sich insbesondere um ein Alkalisierungsmittel (pH-Trigger). In Frage kommen hierfür beispielsweise Alkali- und Erdalkalimetallhydroxide, -oxide und -carbonate oder Portlandzement oder Gemische davon. Bevorzugt sind Alkalimetallhydroxide wie Natriumhydroxid, Kaliumhydroxid und Lithiumhydroxid oder Gemische davon. Besonders bevorzugt sind Natriumhydroxid oder Kaliumhydroxid oder ein Gemisch davon. Die Alkalisierungsmittel können in Form einer wässrigen Lösung, z.B. einer 10 bis 30%igen Lösung, oder in fester Form eingesetzt werden. Weitere geeignete Alkalisierungsmittel sind Ammoniak und Amine, wie Triethanolamin, Dimethylethanolamin, Methyldiethanolamin und dergleichen.

Der Härtungsaktivator dient dazu, die Aushärtung und Trocknung zu aktivieren. Er wird daher erst unmittelbar vor der Anwendung mit der schäumbaren stabilisierten wässrigen Suspension vermischt. Unter "unmittelbar" ist hier weniger als 10 min. vor der Anwendung zu verstehen. Die Menge an Alkalisierungsmittel wird so gewählt, dass der pH-Wert auf mindestens 8, bevorzugt auf mindestens 10, insbesondere mindestens 12 steigt. Da der Härtungsbeschleuniger bereits in schäumbare stabilisierte wässrige Suspension enthalten sein kann, gestaltet sich die Zubereitung und Anwendung eines Schaums besonders einfach. Über die Menge an Alkalisierungsmittel bzw. den sich daraus ergebenden pH-Wert kann die Verarbeitungszeit in einem weiten Bereich geregelt werden.

Unter "Schäumen" wird das Einbringen von Gasbläschen in die schäumbare Suspension verstanden. In einer Ausführungsform erfolgt das Einbringen von Gasbläschenmechanisch durch Einschlagen von Luft, Begasung, Aufschlagen oder andere mechanische Einwirkung. Bei dem Gas kann es sich um Luft, Stickstoff, Helium, Wasserstoff, Argon, Kohlendioxid, gasförmige Kohlenwasserstoffe oder andere inerte Gase handeln. Der Energieeintrag der mechanischen Einwirkung, wie Mischzeit und -geschwindigkeit, kann in Abhängigkeit von der gewünschten Schaumdichte und der Schaumstabilität eingestellt werden. Alternativ kann die über chemische Prozesse, z.B. Zersetzung von $H_2O_2$ oder anderer Peroxide oder Stickstoff-haltiger Verbindungen Gas in die schäumbare Suspension eingebracht werden.

In einer Ausführungsform werden die schäumbare stabilisierte wässrige Suspension und der Härtungsaktivator

miteinander gemischt und die erhaltene Suspension in einem Mischkopf aufgeschäumt, der nach dem Stator-Rotor-Prinzip arbeitet. Ein Beispiel einer geeigneten Vorrichtung ist der Mügromix+ von Heitec Auerbach GmbH oder der "beba Schaummischer" von beba Mischtechnik GmbH. Das Schäumen kann auch durch eine Kombination von Rühren und Einblasen von Luft erfolgen.

In einer bevorzugten Ausführungsform erfolgt das Aufschäumen durch Ausbringen der schäumbaren wässrigen Suspension mit einem Treibmittel durch eine Düse. Das Treibmittel kann unter flüchtigen Kohlenwasserstoffen, wie $C_1$-$C_6$-Alkanen, wie Propan oder Isobutan, $C_2$-$C_6$-Alkenen, halogenierten Kohlenwasserstoffen, wie 1,1,1,2-Tetrafluorethan, Dimethylether oder Gemischen davon ausgewählt sein. Hydrofluoroolefine sind bevorzugte halogenierte Kohlenwasserstoffe. Sie sind schwer entzündbar und Ozon-freundlich und ihr Klimapotential (GWP) ist günstig. Geeignete Fluorolefine sind Z-1,2,3,3,3-Pentafluoropropen (HFO-1225yeZ von Honeywell International Inc.), E-1,2,3,3,3-Pentafluoropropen (HFO-1225yeE), 1,1,3,3,3-Pentafluoropropen (HFO-1225zc), 1,1,2,3,3-Pentafluoropropen (HFO-1225yc), 2,3,3,3-Tetrafluoropropen (HFO-1234yf), trans-1,3,3,3-Tetrafluoroprop-1-en (HFO-1234zeE or HBA-1), cis-1,3,3,3-Tetrafluoropropen (HFO-1234zeZ), und 3,3,3-Trifluoropropene (HFO-1243zf). Das Treibmittel liegt oft in verflüssigter Form vor und verdampft beim Ausbringen der Suspension unter Schäumen.

Eine weitere,jedoch nicht erfindungsgemäße Vorrichtung kann eine Sprühdose sein, zur Herstellung anorganisch-organischer Hybridschäume, mit einer ersten Kammer, deren Innenraum eine vorstehend definierte schäumbare stabilisierte wässrige Suspension enthält, einer zweiten Kammer, deren Innenraum von dem Innenraum der ersten Kammer getrennt ist und einen Härtungsaktivator enthält, wobei wenigstens eine der ersten und zweiten Kammern außerdem ein Treibmittel enthält, einer Aktivierungseinrichtung, deren Betätigung die Innenräume der ersten und zweiten Kammer miteinander in Verbindung bringt, und einer Austrittsöffnung für ein Gemisch aus schäumbarer stabilisierter wässriger Suspension, Härtungsaktivator und Treibmittel. Die Vorrichtung umfasst vorzugsweise außerdem einen Sprühkopf, in welchem die Austrittöffnung für das Gemisch angeordnet ist. In einer Ausführungsform umfasst der Sprühkopf eine Mischkammer, die einerseits mit der Austrittsöffnung und andererseits über mittels der Aktivierungseinrichtung betätigbare Ventile mit der ersten und zweiten Kammer kommuniziert. Alternativ weisen die erste und zweite Kammer eine gemeinsame Trennwand auf, die mittels der Aktivierungseinrichtung geöffnet werden kann. Die Aktivierungseinrichtung kann z.B. als Drehrad am Boden der Sprühdose ausgestaltet sein, das durch Umdrehung eine Härterpatrone öffnet. Die erste und/oder die zweite Kammer umfasst vorzugsweise eine bewegliche oder statische Mischeinrichtung, wie eine bewegliche Kugel oder ein statisches Gitter, um die schäumbare stabilisierte wässrige Suspension und den Härtungsaktivator durch Schütteln der Vorrichtung gut miteinander zu mischen.

Obgleich es bevorzugt ist, die schäumbare stabilisierte wässrige Suspension und den Härtungsaktivator zu mischen und die erhaltene aktivierte schäumbare wässrige Suspension aufzuschäumen, ist es auch möglich, die schäumbare stabilisierte wässrige Suspension aufzuschäumen und anschließend mit dem Härtungsaktivator zu mischen.

Die geschäumte Suspension ist anfangs fluide und kann in Formen oder zu verfüllende Hohlräume oder Spalte eingebracht werden. Anschließend lässt man den Schaum härten. Im Allgemeinen erfolgt das Härten bei einer Temperatur im Bereich von 0 bis 100 °C, vorzugsweise 5 bis 30 °C, insbesondere Raumtemperatur. Die Härtungszeit beträgt 24 Stunden. An die Härtung kann sich eine physikalische Trocknung anschließen.

Die erfindungsgemäß hergestellten Schäume weisen im Allgemeinen eine Dichte von 1,10 bis 1,36 g/$cm^3$ auf. Die erfindungsgemäß hergestellten Schäume sind aufgrund des Gehalts an nicht brennbarem Aluminatzement im Allgemeinen schwer entflammbar. Außerdem besteht die Möglichkeit, inhibierende Zusätze wie Aluminiumhydroxid mitzuverwenden. Bei einem organischen Anteil von weniger als 10 Gew.-% sind die Schäume nicht brennbar.

Die nachfolgenden Beispiele veranschaulichen die Erfindung.

**Testmethoden**

Die Biegezug- und Druckfestigkeit wurde gemäß EN 196-1 ein einem ausgehärteten Prisma bestimmt.

Die Rohdichte wurde in Anlehnung an ISO 845 in Verbindung mit ISO 1923 bestimmt. Für diese Bestimmung wurde ein Quader aus einer durchgehärteten Probe geschnitten und aus den Kantenlängen das Volumen ermittelt. Durch Berechnung des Quotienten von Masse und Volumen wird die Dichte ermittelt.

Die Abbindezeit wurde bestimmt, indem 20 g der frisch aufgeschäumten Formulierung wird in einen 250 ml-Becher eingebracht und eine Stoppuhr gestartet. Alle 10 min wird der Becherinhalt durchmischt. Solange beim Durchmischen eine homogene Masse erkennbar ist, zieht die Formulierung noch nicht an. Sobald beim Durchmischen Klumpen bzw. Aushärtungen erkennbar sind, wird die Stoppuhr gestoppt und die Zeit abgelesen.

Die Cutting Time wurde bestimmt, indem Stränge der aufgeschäumten Formulierung auf einer horizontalen Fläche ausgebracht werden. In definierten Zeitabständen wird der Strang geschnitten. Die Cutting Time ist erreicht, wenn die Schnittfläche nicht mehr klebrig ist, das Messer frei von Polymerrückständen bleibt und die Zellen beim Schneiden nicht gequetscht werden.

## Herstellungsbeispiele

Zunächst wurden die inhibierte Aluminatzement-Suspension (Exalt 60 H, Kerneos, Paris, Frankreich), Polymerdispersion (Styrol-Butylacrylat-Ethylhexylacrylat-Copolymer-Dispersion mit einer Mindestfilmbildetemperatur von etwa +5°C, Feststoffgehalt 50 Gew.-%, Partikelgröße etwa 160 nm; pH-Wert 7), Pigmentverteiler (Dispex AA 4030, BASF SE), Schaumstabilisator (Ammoniumstearat, Baerlocher GmbH, 85716 Unterschleissheim), Schaumbildner (Lutensol TO 15, BASF SE), Verdicker (Laponite RD, BYK-Chemie GmbH, Wesel, Deutschland) und (Rheovis PU 1270, BASF SE) und Wasser vorgelegt und mittels eines Laborspatels homogenisiert.

Anschließend wurden ein Rheologieadditiv (Aerosil 200, Evonik Resource Efficiency GmbH), der Füllstoff (Apyral D 60, Nabaltec AG, 92409 Schwandorf), der Beschleuniger (Peramin AXL 80, Kerneos, Paris, Frankreich) und ein Verzögerer (Natriumgluconat, BASF SE) zugegeben, diese Mischung wurde etwa 120 Sekunden mit einem handelsüblichen Küchenmischer mit mittlerer Rührgeschwindigkeit vermischt. Danach wurde der Küchenmischer auf höchste Stufe gestellt, so dass ein stabiler Schaum entsteht.

Anschließend wurde 20%ige Natronlauge (pH-Trigger) zugegeben und mit dem Küchenmischer weitere 5 Minuten gemischt. Der so aktivierte Schaum wurde in eine Styropor-Form nach EN 196-1 (Innenmaß 160 × 40 ×40 mm) gestrichen, nach 24h herausgenommen und 28 d zu einem Prisma aushärten lassen.

Die Zusammensetzung der Beispiele ist in der folgenden Tabelle angegeben. Sofern nicht anders angegeben beziehen sich die Gew.-% Angaben auf das Gesamtgewicht des Hybridschaums.

Zusammensetzung der hergestellten Beispiele:

| **Einsatzstoffe (Feststoffgehalt)** | **Bsp.1** | **Bsp.2** | **Bsp.3** | **Bsp.4** | **Bsp.5** |
|---|---|---|---|---|---|
| EXALT 60 H (60%ig) | 24 | 32 | 10 | 50 | 40 |
| Polymerdispersion (50%ig) | 40 | 32 | 54 | 10 | 20 |
| Dispex AA 4030 (30%ig) | 0,3 | 0,3 | 0,3 | 0,3 | 0,3 |
| Aerosil 200 | 1,5 | 1,5 | 1,5 | 1,5 | 1,5 |
| Apyral D60 | 10 | 8 | 8 | 5 | 8 |
| Ammoniumstearat (35%ig) | 8 | 10 | 10 | 10 | 8 |
| Lutensol TO 15 (20%ig) | 4 | 4 | 4 | 5 | 4 |
| Laponite RD (5%ig) | 4 | 4 | 4 | 4 | 2 |
| Rheovis PU 1270 (26%ig) | 0,3 | 0,3 | 0,3 | 0,3 | 0,3 |
| Peramin AXL80 (Lithiumsulfat-Monohydrat >97%ig) | 2,2 | 2,9 | 0,9 | 4,5 | 3,3 |
| Natriumgluconat (>99%ig) | 0,2 | 0,3 | 0,1 | 0,5 | 0,4 |
| Wasser | 4,8 | 3,1 | 7,7 | 5,3 | 8 |
| Natronlauge (20%ig) | 2,7 | 3,6 | 1,2 | 5,6 | 4,2 |
| *Summe in Gew.-%* | *102* | *102* | *102* | *102* | *100* |

Die Referenzbeispiele 1-3 sind handelsübliche Füllschäume.

Referenzbeispiel 1 ist ein wasserbasierter Schaum auf Basis eines Copolymers zur Verfüllung von Löchern und Spalten in Gebäuden (Füllschaum, Produktname: "Space Invader", Fa. Selleys, DuluxGroup, Australia)

Referenzbeispiel 2 ist ein SMX-Schaum (Füllschaum auf Basis eines silanisierten Polymeren, isocyanatfrei, Produktname "SMX-Schaum, Adapterschaum", Fa. Soudal, Belgien)

Referenzbeispiel 3 stellt einen 1K PU Schaum dar (Isocyanat-haltiger Schaum zum Füllen und Abdichten, Produktname "Tytan Professional STD", Fa. Selena, Polen)

Die Referenzbeispiele werden in Spraydosen angeboten, die Treibgase enthalten. Die Referenzbeispiele wurden aus der Spraydose (Lieferform) appliziert. Das Ausbringen der Schäume erfolgte gemäß der beigefügten Anwenderhinweise über die mitgelieferten Adapter.

Biegezug- und Druckfestigkeiten (28d) Mörtelprismen nach EN_196-1

| | Biegezugfestigkeit (N/mm$^2$) | Druckfestigkeit (N/mm$^2$) | Rohdichte (g/l) |
|---|---|---|---|
| Ref.-Bsp. 1 | keine Festigkeit | keine Festigkeit | 65 |

(fortgesetzt)

| | Biegezugfestigkeit (N/mm$^2$) | Druckfestigkeit (N/mm$^2$) | Rohdichte (g/l) |
|---|---|---|---|
| Ref.-Bsp. 2 | keine Festigkeit | keine Festigkeit | 67 |
| Ref.-Bsp. 3 | 0,18 | 0,12 | 26 |
| Bsp.1 | 0,11 | 0,55 | 285 |
| Bsp.2 | 0,32 | 0,59 | 210 |
| Bsp.3 | keine Festigkeit | 0,13 | 148 |
| Bsp.4 | 0,09 | 0,14 | 316 |
| Bsp.5 | 0,31 | 0,34 | 278 |
| | | | |

Abbindezeit (min):

| | Abbindezeit (min) | Cutting Time (min) |
|---|---|---|
| Ref.-Bsp. 1 | >360 | >480 |
| Ref.-Bsp. 2 | 10 | 60 |
| Ref.-Bsp. 3 | 10 | 40 |
| Bsp.1 | 40 | 60 |
| Bsp.2 | 30 | 50 |
| Bsp.3 | 60 | 350 |
| Bsp.4 | 20 | 20 |
| Bsp.5 | 20 | 50 |

Anhand der Messwerte der Beispiele und Referenzbeispiele lässt sich erkennen, dass die erfindungsgemäßen Beispiele 1-5 die Druckfestigkeiten der Referenzbeispiele 1-3 übertreffen. Die Beispiele 2 und 5 übertreffen die Biegezugfestigkeiten der Referenzbeispiele deutlich. Darüber hinaus sind die erfindungsgemäßen Beispiele hinsichtlich der Abbindezeit und Cutting Time deutlich kürzer als das Referenzbeispiel 1. Die erfindungsgemäßen Beispiele 1, 2, 4 & 5 liegen bei der Cutting Time etwa im Bereich der Referenzbeispiele 2 und 3. Damit ist eine deutlich schnellere Reaktivität bzw. Durchhärtung gegenüber dem wasserbasierten Schaum (Referenzbeispiel 1) gegeben.

Somit lassen sich die erfindungsgemäßen aktivierbaren Hybridschäume vorteilhaft für Bauanwendungen nutzen. Sie sind pastös formuliert, durch einen Aktivator (pH-Trigger) schaltbar und damit einfacher in der Verwendung als zementäre Schäume. Die Vorteile gegenüber wasserbasierten Schäumen liegen in der überlegenen mechanischen Festigkeit sowie dem schnelleren Durchhärten. Wasserfreie, durch Luftfeuchtigkeit härtende Schäume (isocyanatfrei wie -haltig) werden hinsichtlich Druckfestigkeit bzw. Biegezugfestigkeit übertroffen. Im Gegensatz zu den reaktiven Referenzbeispielen 2 und 3 sowie dem physikalisch trocknenden Referenzbeispiel 1 sind die erfindungsgemäßen Beispiele darüber hinaus im Abbindeverhalten weitgehend von der Luftfeuchte unabhängig. Damit sind die erfindungsgemäßen Beispiele in der Aushärtung toleranter und klimatisch robuster.

Prinzipiell sind die erfindungsgemäßen Hybridschäume isocyanatfrei und dadurch in der Gefahrenbeurteilung vorteilhaft.

**Patentansprüche**

**1.** Mehrteiliger Kit, umfassend als einen ersten Teil eine schäumbare stabilisierte wässrige Suspension zur Herstellung anorganisch-organischer Hybridschäume und als einen zweiten Teil einen Härtungsaktivator für die schäumbare stabilisierte wässrige Suspension, wobei die schäumbare stabilisierte wässrige Suspension, enthält

a) einen inhibierten hydraulischen Binder, ausgewählt unter Calciumaluminatzement, Calciumsulfoaluminatzement und Gemischen davon, wobei der hydraulische Binder mittels eines Abbinde-Inhibitors inhibiert ist, der ausgewählt ist unter Borsäure, Sauerstoffsäuren des Phosphors und Salzen davon;
b) einen organischen Binder; und
c) einen Schaumbildner;

und der Härtungsaktivator ein Alkalisierungsmittel ist.

2. Mehrteiliger Kit nach Anspruch 1, wobei die schäumbare stabilisierte wässrige Suspension außerdem einen Verzögerer enthält.

3. Mehrteiliger Kit nach Anspruch 2, wobei der Verzögerer ausgewählt ist unter Lignosulfonaten, Cellulosederivaten, Hydroxycarbonsäuren, synthetischen Verzögerern, und anorganischen Verbindungen und Gemischen davon.

4. Mehrteiliger Kit nach einem der vorhergehenden Ansprüche, wobei der Schaumbildner unter oberflächenaktive Substanzen, hydrophilen Polymeren, proteinischen Schaumbildnern und Gemischen davon ausgewählt ist.

5. Mehrteiliger Kit nach einem der vorhergehenden Ansprüche, wobei die schäumbare stabilisierte wässrige Suspension außerdem einen Härtungsbeschleuniger enthält.

6. Mehrteiliger Kit nach Anspruch 5, wobei der Härtungsbeschleuniger ausgewählt unter Lithiumcarbonat, Lithiumsulfat, Lithiumacetat, Lithiumsilikat, Natriumcarbonat, Natriumsulfat, Natriumsilikat, Natriumaluminat, Kaliumchlorid, Kaliumsilikat, Calciumformiat, Calciumchlorid, Caiciumsilikathydrat, Calciumaluminat, und Aluminiumsalzen und Gemischen davon.

7. Mehrteiliger Kit nach einem der vorhergehenden Ansprüche, wobei die schäumbare stabilisierte wässrige Suspension außerdem einen Schaumstabilisator enthält.

8. Mehrteiliger Kit nach Anspruch 7, wobei der Schaumstabilisator ausgewählt ist unter Fettsäuresalzen, Fettalkoholen, Fettsäurealkanolamiden, Aminoxiden, Phosphinoxiden, Fettsäureamidopropylbetainen, Fettsäuretauriden Celluloseethern, Siliconpolyethercopolymeren.

9. Mehrteiliger Kit nach einem der vorhergehenden Ansprüche, wobei der Härtungsaktivator einen Härtungsbeschleuniger enthält.

10. Verfahren zur Herstellung anorganisch-organischer Hybridschäume, bei dem man

aa) eine schäumbare stabilisierte wässrige Suspension, enthaltend a) einen inhibierten hydraulischen Binder, ausgewählt unter Calciumaluminatzement, Calciumsulfoaluminatzement und Gemischen davon, wobei der hydraulische Binder mittels eines Abbinde-Inhibitors inhibiert ist, der ausgewählt ist unter Borsäure, Sauerstoffsäuren des Phosphors und Salzen davon; b) einen organischen Binder; und c) einen Schaumbildner; mit einem Härtungsaktivator versetzt, welcher Härtungsaktivator ein Alkalisierungsmittelist,
bb) die schäumbare wässrige Suspension aufschäumt, und
cc) die geschäumte wässrige Suspension härten lässt.

11. Verfahren nach Anspruch 10, wobei der Härtungsaktivator einen Härtungsbeschleuniger enthält.

12. Verfahren nach Anspruch 10 oder 110, wobei das Aufschäumen mechanisch oder über einen chemischen Prozess erfolgt.

13. Verfahren nach Anspruch 12, wobei das Aufschäumen durch Ausbringen der schäumbaren wässrigen Suspension mit einem Treibmittel durch eine Düse erfolgt.

14. Verfahren nach einem der Ansprüche 10 bis 13, wobei der Härtungsaktivator Natriumhydroxid ist.

15. Verfahren nach Anspruch 14, wobei die mit dem Alkalisierungsmittel versetzte Suspension einen pH von 8 oder höher aufweist.

16. Verwendung des mehrteiligen Kitsnach einem der Ansprüche 1 bis 9 zum Füllen von Spalten und Hohlräumen, zur Abdichtung, zur thermischen Dämmung, zur akustischen Dämmung, als Klebstoff oder als Beschichtung.

17. Verwendung des mehrteiligen Kits nach einem der Ansprüche 1 bis 9 zur Herstellung vorgefertigter Bauteile, zur Verankerung und/oder Verfestigung, als Membran oder zum Brandschutz.

**Claims**

1. A multi-part kit comprising as a first part a foamable stabilized aqueous suspension for the production of inorganic-organic hybrid foams and as a second part a curing activator for the foamable stabilized aqueous suspension, wherein the foamable stabilized aqueous suspension comprises

   a) an inhibited hydraulic binder selected from calcium aluminate cement, calcium sulfoaluminate cement and mixtures thereof, the hydraulic binder being inhibited by means of a setting inhibitor selected from boric acid, oxygen acids of phosphorus and salts thereof;
   b) an organic binder; and
   c) a foam former;

   and the curing activator is an alkalizing agent.

2. A multi-part kit according to claim 1, wherein the foamable stabilized aqueous suspension further comprises a retarder.

3. A multi-part kit according to claim 2, wherein the retarder is selected from lignosulfonates, cellulose derivatives, hydroxycarboxylic acids, synthetic retarders, and inorganic compounds and mixtures thereof.

4. A multi-part kit according to any of the preceding claims, wherein the foam former is selected from surface-active substances, hydrophilic polymers, proteinaceous foam formers and mixtures thereof.

5. A multi-part kit according to any of the preceding claims, wherein the foamable stabilized aqueous suspension further comprises a curing accelerator.

6. A multi-part kit according to claim 5, wherein the curing accelerator is selected from lithium carbonate, lithium sulfate, lithium acetate, lithium silicate, sodium carbonate, sodium sulfate, sodium silicate, sodium aluminate, potassium chloride, potassium silicate, calcium formate, calcium chloride, calcium silicate hydrate, calcium aluminate, and aluminum salts and mixtures thereof.

7. A multi-part kit according to any of the preceding claims, wherein the foamable stabilized aqueous suspension further comprises a foam stabilizer.

8. A multi-part kit according to claim 7, wherein the foam stabilizer is selected from fatty acid salts, fatty alcohols, fatty acid alkanolamides, amine oxides, phosphine oxides, fatty acid amidopropyl betaines, fatty acid taurides, cellulose ethers, and silicone polyether copolymers.

9. A multi-part kit according to any of the preceding claims, wherein the curing activator comprises a curing accelerator.

10. A method for the production of inorganic-organic hybrid foams, which comprises

    aa) admixing a foamable stabilized aqueous suspension comprising a) an inhibited hydraulic binder selected from calcium aluminate cement, calcium sulfoaluminate cement and mixtures thereof, the hydraulic binder being inhibited by means of a setting inhibitor selected from boric acid, oxygen acids of phosphorus and salts thereof, b) an organic binder and c) a foam former with a curing activator, which curing activator is an alkalizing agent,
    bb) foaming the foamable aqueous suspension, and
    cc) curing the foamed aqueous suspension.

11. A method according to claim 10, wherein the curing activator comprises a curing accelerator.

**12.** A method according to claim 10 or 11, wherein the foaming takes place mechanically or via a chemical process.

**13.** A method according to claim 12, wherein the foaming takes place by delivery of the foamable aqueous suspension with a blowing agent through a nozzle.

**14.** A method according to any of claims 10 to 13, wherein the curing activator is sodium hydroxide.

**15.** A method according to claim 14, wherein the suspension admixed with the alkalizing agent has a pH of 8 or higher.

**16.** The use of the multi-part kit according to any of claims 1 to 9 for filling gaps and cavities, for sealing, for thermal insulation, for acoustic insulation, as an adhesive or as a coating.

**17.** The use of the multi-part kit according to any of claims 1 to 9 for the production of prefabricated components, for anchoring and/or solidification, as a membrane or for fire protection.

## Revendications

**1.** Kit en plusieurs parties comprenant, en tant qu'une première partie, une suspension aqueuse stabilisée moussable pour la préparation de mousses hybrides inorganiques-organiques et, en tant qu'une deuxième partie, un activateur de durcissement pour la suspension aqueuse stabilisée moussable, la suspension aqueuse stabilisée moussable contenant

a) un liant hydraulique inhibé choisi parmi un ciment d'aluminate de calcium, un ciment de sulfoaluminate de calcium et leurs mélanges, le liant hydraulique étant inhibé au moyen d'un inhibiteur de prise choisi parmi l'acide borique, les acides oxygénés du phosphore et leurs sels ;
b) un liant organique ; et
c) un agent moussant ;

et l'activateur de durcissement étant un agent alcalinisant.

**2.** Kit en plusieurs parties selon la revendication 1, dans lequel la suspension aqueuse stabilisée moussable contient en outre un retardateur.

**3.** Kit en plusieurs parties selon la revendication 2, dans lequel le retardateur est choisi parmi les lignosulfonates, les dérivés de cellulose, les acides hydroxycarboxyliques, les retardateurs synthétiques, et les composés inorganiques et leurs mélanges.

**4.** Kit en plusieurs parties selon l'une quelconque des revendications précédentes, dans lequel l'agent moussant est choisi parmi les agents tensioactifs, les polymères hydrophiles, les agents moussants protéiniques et leurs mélanges.

**5.** Kit en plusieurs parties selon l'une quelconque des revendications précédentes, dans lequel la suspension aqueuse stabilisée moussable contient en outre un accélérateur de durcissement.

**6.** Kit en plusieurs parties selon la revendication 5, dans lequel l'accélérateur de durcissement est choisi parmi le carbonate de lithium, le sulfate de lithium, l'acétate de lithium, le silicate de lithium, le carbonate de sodium, le sulfate de sodium, le silicate de sodium, l'aluminate de sodium, le chlorure de potassium, le silicate de potassium, le formiate de calcium, le chlorure de calcium, le silicate de calcium hydraté, l'aluminate de calcium, et les sels d'aluminium et leurs mélanges.

**7.** Kit en plusieurs parties selon l'une quelconque des revendications précédentes, dans lequel la suspension aqueuse stabilisée moussable contient en outre un stabilisateur de mousse.

**8.** Kit en plusieurs parties selon la revendication 7, dans lequel le stabilisateur de mousse est choisi parmi les sels d'acides gras, les alcools gras, les alcanolamides d'acides gras, les oxydes d'amines, les oxydes de phosphines, les amidopropylbétaïnes d'acides gras, les taurides d'acides gras, les éthers de cellulose, les copolymères silicone-polyéther.

**9.** Kit en plusieurs parties selon l'une quelconque des revendications précédentes, dans lequel l'activateur de durcissement contient un accélérateur de durcissement.

**10.** Procédé de préparation de mousses hybrides inorganiques-organiques, dans lequel

aa) une suspension aqueuse stabilisée moussable contenant a) un liant hydraulique inhibé choisi parmi un ciment d'aluminate de calcium, un ciment de sulfoaluminate de calcium et leurs mélanges, le liant hydraulique étant inhibé par un inhibiteur de prise choisi parmi l'acide borique, les acides oxygénés du phosphore et leurs sels ; b) un liant organique ; et c) un agent moussant ; est mélangée avec un activateur de durcissement, l'activateur de durcissement étant un agent alcalinisant,
bb) la suspension aqueuse moussable est moussée, et
cc) la suspension aqueuse moussée est laissée durcir.

**11.** Procédé selon la revendication 10, dans lequel l'activateur de durcissement contient un accélérateur de durcissement.

**12.** Procédé selon la revendication 10 ou 11, dans lequel le moussage est effectué mécaniquement ou par un procédé chimique.

**13.** Procédé selon la revendication 12, dans lequel le moussage est effectué en distribuant la suspension aqueuse moussable avec un agent gonflant à travers une buse.

**14.** Procédé selon l'une quelconque des revendications 10 à 13, dans lequel l'activateur de durcissement est l'hydroxyde de sodium.

**15.** Procédé selon la revendication 14, dans lequel la suspension mélangée à l'agent alcalinisant présente un pH de 8 ou plus.

**16.** Utilisation du kit en plusieurs parties selon l'une quelconque des revendications 1 à 9 pour le remplissage d'interstices et de cavités, pour l'étanchéification, pour l'isolation thermique, pour l'isolation acoustique, en tant qu'adhésif ou en tant que revêtement.

**17.** Utilisation du kit en plusieurs parties selon l'une quelconque des revendications 1 à 9 pour la fabrication de composants préfabriqués, pour l'ancrage et/ou la consolidation, en tant que membrane ou pour la protection contre l'incendie.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 9812248 A
- WO 0170647 A
- US 20140343194 A
- US 2003125404 A
- EP 0181739 A
- EP 0353062 A
- WO 2017212044 A
- DE 4003422 A
- US 4269749 A
- EP 40419 B
- EP 567812 A
- EP 614922 A
- DE 4213965 A


### In der Beschreibung aufgeführte Nicht-Patentliteratur


- Ullmann's Encyclopedia of Industrial Chemistry. Verlag Chemie, 1992, 169
- **ZOSEL**. *Farbe und Lack*, 1976, vol. 82, 125-134
- **T.G. FOX**. *Bull. Am. Phys. Soc.*, 1956, vol. 1, 123
- Ull-mann's Encyclopädie der technischen Chemie. Verlag Chemie, 1980, vol. 19, 18
- **J. BRANDRUP** ; **E.H. IMMERGUT**. Polymer Handbook. J. Wiley, 1966
- **J. BRANDRUP, E.H. IMMERGUT**. Polymer Handbook. J. Wiley, 1975
- **J. BRANDRUP, E.H. IMMERGUT**. Polymer Handbook. J. Wiley, 1989
- Ullmann's Cncyclopedia of Industrial Chemistry. Verlag Chemie, 1992, 169
- Emulsionspolymerisation. Encyclopedia of Polymer Science and Engineering. 1987, vol. 8, 659
- **D.C. BLACKLEY**. *High Polymer Latices*, 1966, vol. 1, 35
- **H. WARSON**. *The Applications of Synthetic Resin Emulsions*, 1972, vol. 5, 246
- **D. DIEDERICH**. *Chemie in unserer Zeit*, 1990, vol. 24, 135-142
- Emulsion Polymerisation. Interscience Publishers, 1965
- **F. HÖLSCHER**. Dispersionen synthetischer Hochpolymerer. Springer-Verlag, 1969
- Methoden der organischen Chemie. **HOUBEN-WEYL**. Makromolekulare Stoffe. Georg-Thieme-Verlag, 1961, vol. XIV, 411-420
- Methoden der organischen Chemie. **HOUBEN-WEYL**. Makromolekulare Stoffe. Georg-Thieme-Verlag, 1961, vol. XIV, 192-208
- **J. BRANDRUP** ; **E.H. IMMERGUT**. Polymerhandbook. John Weiley & Sons, 1989, vol. II, 133-141
- Encyclopedia of Polymer Science and Technology. John Wiley & Sons Inc., 1966, vol. 5, 847